# EUROPEAN PATENT SPECIFICATION

(11) **EP 3 459 650 B1**
(45) Date of publication and mention of the grant of the patent: **16.11.2022**
(21) Application number: 18196987.4
(22) Date of filing: 26.09.2018
(51) Int. Cl.: B21D 26/051, B21D 26/059, B21D 47/04, B21D 53/92, B21D 51/16, B64D 33/00

(54) **MANUFACTURING A SHAPED STRUCTURAL PANEL WITH A MANDREL AND A PRESSURE VESSEL**
HERSTELLUNG EINER FORMBAUPLATTE MIT DORN UND DRUCKBEHÄLTER
FABRICATION D'UN PANNEAU DE STRUCTURE FORMÉ AVEC UN MANDRIN ET UN RÉCIPIENT SOUS PRESSION

(30) Priority: 26.09.2017 US 201715715198
(43) Date of publication of application: 27.03.2019
(73) Proprietor: Rohr, Inc., Chula Vista, CA 91910-2098 (US)
(72) Inventor: STRUTT, Andrew J, San Diego, CA 92122-3601 (US)
(74) Representative: Dehns

(56) References cited:
- US-A- 2 988 809
- US-A- 3 930 605
- US-A1- 2015 102 128
- US-B1- 8 707 747

## Description

### BACKGROUND

### 1. Technical Field

This disclosure relates generally to a structural panel and, more particularly, to a process for manufacturing a structural panel of, for example, an aircraft propulsion system nacelle.

### 2. Background Information

A turbine engine may include a structural panel such as a high temperature, noise attenuation panel to reduce noise emitted during turbine engine operation and to define the flowpath of air within the fan duct. The structural panel may be manufactured by bonding together layered metallic materials using a differential pressure bonding process, dead weight or tooling utilizing differing coefficients of expansion. The layered metallic materials may include a metal honeycomb core (e.g., open cell core) arranged between opposing metal skins (e.g., face sheets).

According to known bonding processes, a pressure differential may be applied across the layered metallic materials to simultaneously compress and bond the materials together at an elevated temperature. The layered metallic materials, for example, may be compressed between an inflatable pressure vessel and a support, and heated within a process chamber. The process chamber may be a vacuum furnace or an inert gas furnace. Bonding material is typically arranged between adjacent layers of the metallic materials, which material bonds the layers together; e.g., by liquid interface diffusion or brazing.

Subsequent to the bonding process, the structural panel may be shaped to have a simple or complex curved geometry; e.g., a cylindrical, conical, spherical or compound curved geometry. According to known techniques, disclosed in US-B-8707747, the panel may be shaped by pressing the panel against a die with an inflatable pressure vessel, thereby causing the panel to assume the shape of the die. Such a formation technique can, however, crush or otherwise deform the honeycomb core portion of the panel, particularly when the adopted panel shape requires significant pressure to form it. US-A-3930605 discloses a manufacturing process comprising: arranging a body with a mandrel having an axially convex geometry, the body circumscribing an outer surface of the mandrel and comprising a panel and a sheet, the panel comprising a porous first skin, a second skin and a cellular core between and connected to the porous first skin and the second skin.

There is a need in the art for an improved process for manufacturing a structural panel.

### SUMMARY OF THE DISCLOSURE

According to an aspect of the present invention, a manufacturing process is provided that includes: arranging a tubular body with a mandrel, the tubular body circumscribing an outer surface of the mandrel and comprising a panel and a sheet, the panel comprising a porous first skin, a second skin and a cellular core between and connected to the porous first skin and the second skin, and the sheet configured with the second skin to form a pressure vessel, wherein the first skin and the cellular core are located within the pressure vessel, and at least a portion of the outer surface comprises an axially convex geometry; heating the panel; and shaping the heated panel to at least partially conform to the outer surface by pressurizing fluid within the pressure vessel.

The pressurized fluid may force at least a portion of the second skin radially inward against the outer surface causing the heated panel to at least partially conform to the outer surface.

The process may also include arranging a second mandrel with the tubular body. An inner surface of the second mandrel may circumscribe the tubular body. The pressurized fluid may force at least a portion of the sheet radially outward against the inner surface.

Perforations in the porous first skin may fluidly couple cavities within the cellular core with a plenum formed between the panel and the sheet. The pressurized fluid may be within the perforations, the cavities and the plenum.

The mandrel may be configured as a tubular mandrel.

The process may also include removing a plurality of discrete circumferential mandrel segments from a bore of the shaped panel. The outer surface may be collectively formed by the circumferential mandrel segments.

The axially convex geometry may extend circumferentially around a centerline of the mandrel.

The process may also include disconnecting the sheet from the second skin of the shaped panel.

The process may also include removing material from a perimeter of the second skin. The sheet may be connected to the material before being disconnected from the second skin.

The process may also include: arranging the cellular core between a first skin and the second skin; bonding the cellular core to the first skin and the second skin; perforating the first skin to provide the porous first skin; and bonding a perimeter portion of the sheet to a perimeter portion of the second skin.

The cellular core may be at least one of welded, brazed or diffusion bonded to the porous first skin and the second skin.

The fluid may be or otherwise include an inert gas. This inert gas may be Argon gas, or another inert gas.

The process may also include providing a barrel of an inner fixed structure for an aircraft propulsion system. The barrel may include at least a portion of the shaped panel.

The foregoing features and the operation of the invention will become more apparent in light of the following description and the accompanying drawings.

### BRIEF DESCRIPTION OF THE DRAWINGS

FIG. 1 is a perspective cutaway illustration of a portion of a structural panel.
FIG. 2 is a perspective illustration of the panel of FIG. 1.
FIG. 3 is a flow diagram of a process for manufacturing a structural panel.
FIG. 4 is a perspective illustration of a preform tubular panel.
FIG. 5 is a sectional illustration of a tubular body that includes the preform tubular panel of FIG. 4.
FIG. 6 is a sectional illustration of the tubular body of FIG. 5 disposed in an annular cavity of a mandrel assembly.
FIG. 7 is a perspective illustration of an inner mandrel of the mandrel assembly of FIG. 6.
FIG. 8 is a perspective illustration of an outer mandrel of the mandrel assembly of FIG. 6.
FIG. 9 is a sectional illustration of the assemblage of FIG. 6 after fluid within a pressure vessel has been pressurized.
FIG. 10 is a partial sectional illustration of a shaped panel and a corresponding disconnected sheet of material.
FIG. 11 is a partial sectional illustration of a shaped structural panel.

### DETAILED DESCRIPTION

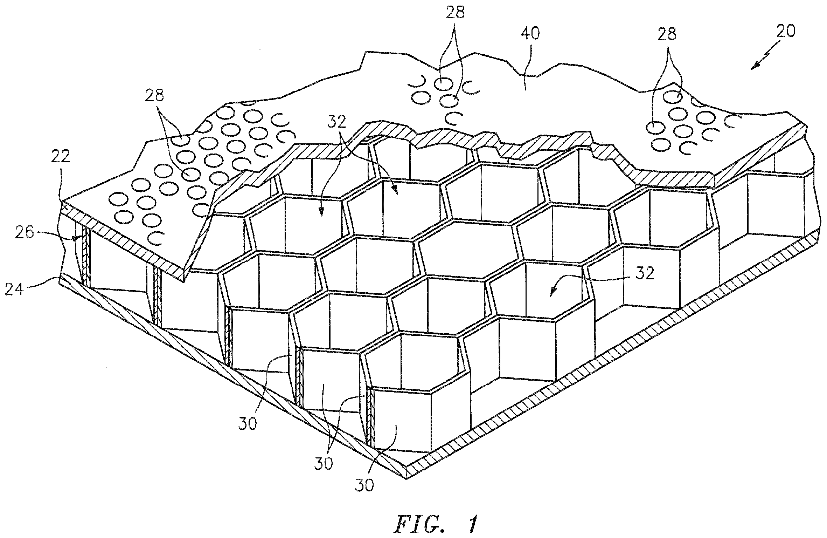

The present disclosure includes processes for manufacturing a structural tubular panel. An exemplary embodiment of a portion of such a panel 20 is shown in FIG. 1.

The panel 20 of FIG. 1 is configured as an acoustic panel; e.g., a sound attenuating panel. The panel 20, for example, may be configured to attenuate noise generated by an aircraft propulsion system such as, for example, a turbofan propulsion system. With such a configuration, the panel 20 may be configured to form part of a nacelle of the propulsion system. The panel 20, for example, may be configured as a tubular barrel of an inner fixed structure, a tubular outer barrel of a nacelle inlet assembly, etc. Furthermore, the panel 20 may also or alternatively be configured to attenuate aircraft related noise other than that generated by the propulsion system. The panel 20 of the present disclosure, of course, may alternatively be configured for non-aircraft applications and/or non-sound suppression applications.

The panel 20 of FIG. 1 includes a porous (e.g., perforated) first skin 22, a solid non-porous (e.g., non-perforated) second skin 24 and a cellular core 26. The term "porous" is used herein to describe a body with perforations and/or open cell pores that enable flow of fluid through the body. The term "non-porous" is used herein to describe a body with a configuration that prevents flow of fluid through the body; e.g., a body without perforations or open cell pores.

The first skin 22 may be configured as a relatively thin sheet or layer of material. This first skin material may be, but is not limited to, metal. The first skin 22 of FIG. 1 includes a plurality of perforations 28; e.g., apertures such as through-holes. Each of these perforations 28 extends generally through the first skin 22.

The second skin 24 may be configured as a relatively thin sheet or layer of (e.g., continuous and uninterrupted) material. This second skin material may be, but is not limited to, metal. This second skin material may be the same as or different than the first skin material.

The core 26 is arranged radially between and is connected to the first skin 22 and the second skin 24. The core 26, for example, may be welded, brazed, diffusion bonded, fused, adhered and/or otherwise bonded to the first skin 22 and the second skin 24.

The core 26 is configured as an open cell porous structure. The core 26 of FIG. 1, for example, has a honeycomb configuration formed by a plurality of side-by-side corrugated walls 30. With such a configuration, the core 26 includes a plurality of cavities 32. Each of these cavities 32 extends through the core 26 between the first skin 22 and the second skin 24. Each of the cavities 32 is fluidly coupled with one or more of the perforations 28 in the first skin 22. The present disclosure, however, is not limited to such an exemplary core configuration. The core 26, for example, may be configured with a so-called N-core configuration, an example of which is described in U.S. Patent No. 9,592,918 to Yu et al., or any other structural panel core configuration.

The core material may be, but is not limited to, metal. This core material may be the same as or different than the first skin material and/or the second skin material.

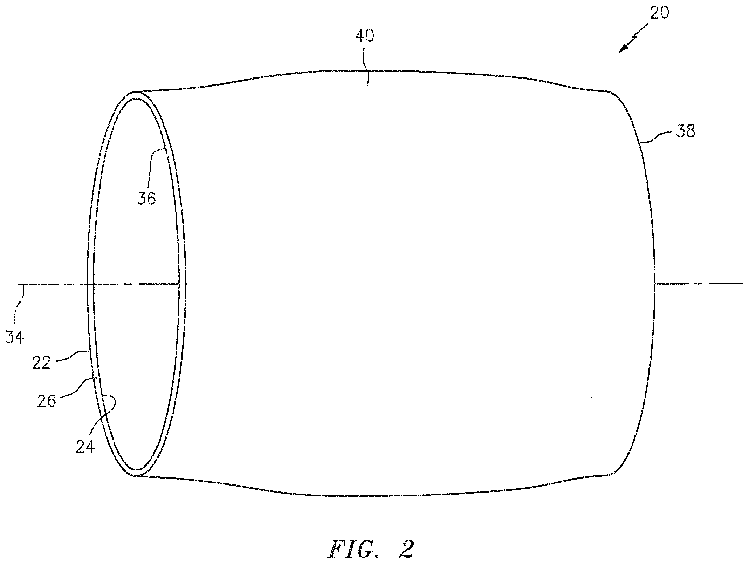

Referring to FIG. 2, the panel 20 (shown without perforations 28 for ease of illustration) may be shaped with a complex / radially varying tubular geometry. The panel 20 of FIG. 2, for example, extends circumferentially about an axial centerline 34 to provide the panel 20 with a full hoop body. The panel 20 extends axially along the centerline 34 between an axial first end 36 and an axial second end 38. At least a portion of the panel 20 (e.g., an axial length of the panel 20) or the entire axial length of the panel 20 may have an axially convex geometry. For example, a side section of a radial outer surface 40 of the panel 20 formed by the first skin 22 (and/or a radially opposing side section of a radial inner surface (not visible in FIG. 2) of the panel 20 formed by the second skin 24) may have a convex geometry when viewed in a plane in which the centerline 34 lies. The panel 20 therefore may be generally barrel shaped. The panel 20 of the present disclosure, however, is not limited to such an exemplary barrel shaped configuration. For example, in other embodiments, at least an axial portion of the panel 20 may have a straight, undulating or other type of side-sectional geometry.

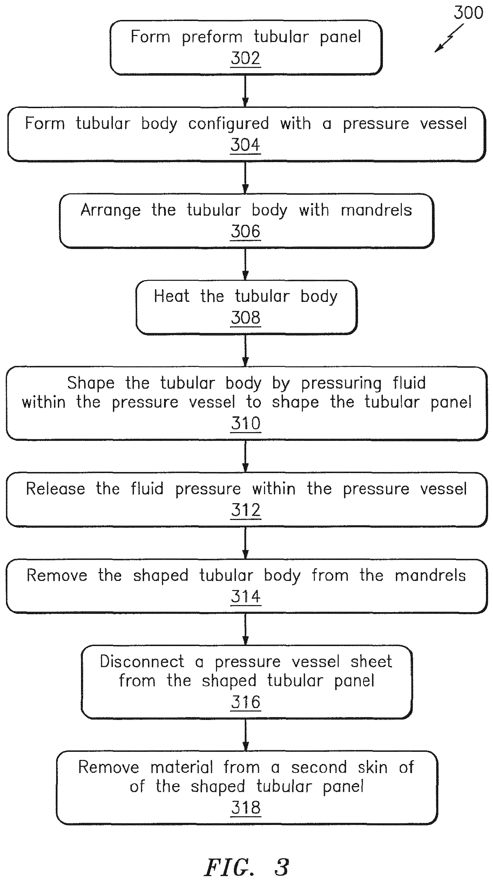

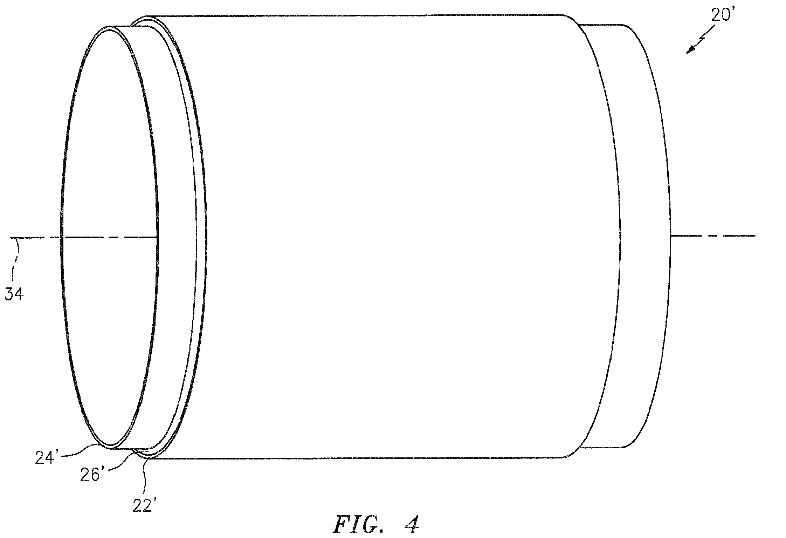

FIG. 3 is a flow diagram of a process 300 for manufacturing a structural tubular panel such as, but not limited to, the panel 20 described above. In step 302, a preform tubular (e.g., cylindrical) panel 20' is assembled. For example, referring to FIG. 4, a tubular (e.g., cylindrical) first skin 22', a tubular (e.g., cylindrical) second skin 24' and a tubular (e.g., cylindrical) cellular core 26' are arranged together such that the core 26' is radially between the first skin 22' and the second skin 24', where the first skin 22' circumscribes the core 26' and the core 26' circumscribes the second skin 24'. The core 26' is then connected to the first skin 22' and the second skin 24' by, for example, a welded connection, a brazed connection, a diffusion bonded connection or any other type of bonded connection. The first skin 22' may subsequently be perforated using a drill, a laser or any other perforating device. Of course, in other embodiments, the first skin 22' may be perforated prior to being bonded to the core 26'.

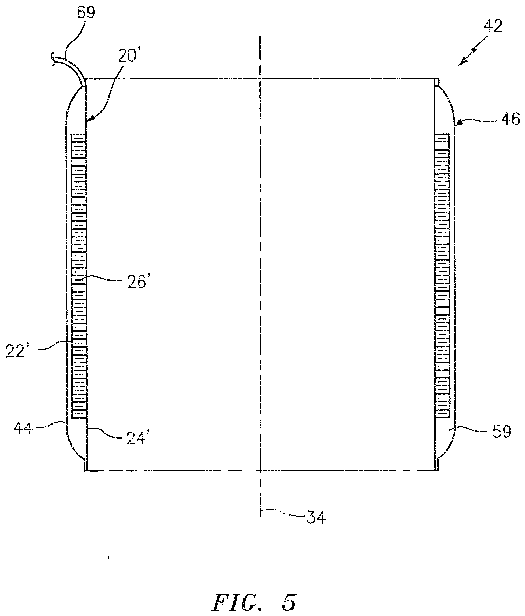

In step 304, a tubular (e.g., cylindrical) body 42 is assembled. In particular, referring to FIG. 5, the panel is configured with a tubular (e.g., cylindrical) sheet 44; e.g., outer cover / pressure vessel sheet. This sheet 44 may be made from a material (e.g., metal) that is the same as other different than but bondable to the second skin material. The sheet 44 is arranged such that it circumscribes the panel 20'. An annular perimeter portion of the sheet 44 is then directly or indirectly connected (e.g., bonded) to a corresponding annular perimeter portion of the second skin 24'. In this manner, the sheet 44 and the second skin 24' form a pressure vessel 46, where the first skin 22' and the core 26' are located within an interior of the pressure vessel 46.

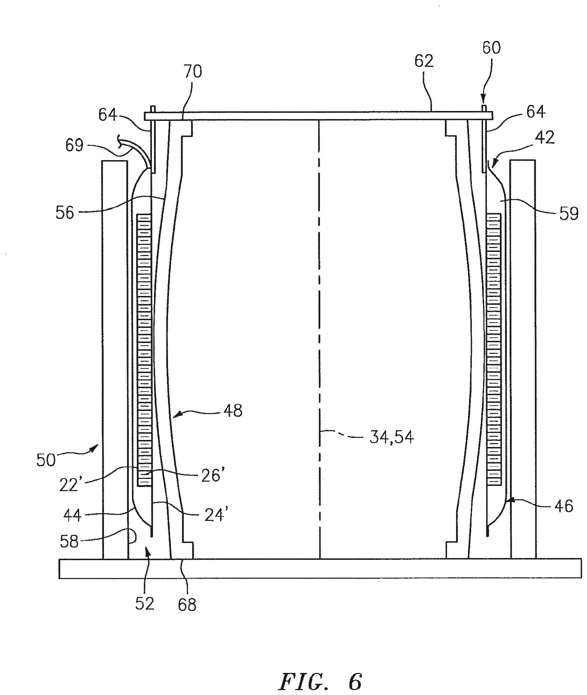

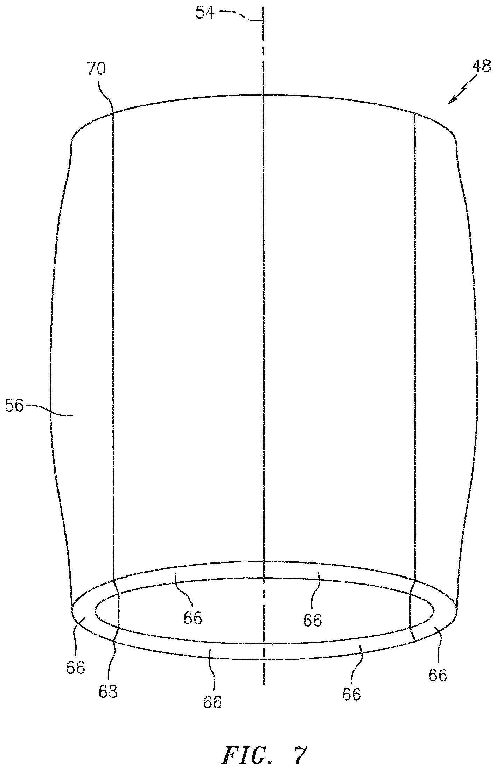

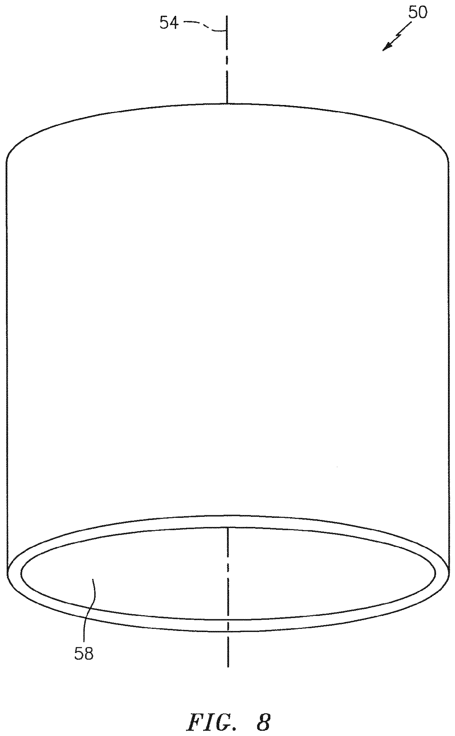

In step 306, the tubular body 42 is arranged with one or more mandrels 48 and 50, for example, as shown in FIG. 6. In particular, the tubular body 42 is disposed within an annular cavity 52 formed radially between the inner mandrel 48 and the outer mandrel 50. The tubular body 42, for example, may be moved (e.g., translated) along an axial centerline 54 of the mandrels 48 and 50, which centerline 54 may be parallel / coaxial with the centerline 34, into the annular cavity 52. A radial outer surface 56 of the inner mandrel 48 forms a radial inner periphery of the annular cavity 52; see also FIG. 7. A radial inner surface 58 of the outer mandrel 50 forms a radial outer periphery of the annular cavity 52; see also FIG. 8. With such an arrangement, the tubular body 42 circumscribes the inner mandrel 48 and the outer mandrel 50 circumscribes the tubular body 42.

The tubular body 42 may be positioned within the annular cavity 52 by a support assembly 60. The support assembly 60 of FIG. 6 includes a fixture 62 and one or more suspension elements 64 (e.g., tabs). The fixture 62 may include one or more rods and/or other elements, which extend across an end (e.g., a top end 70) of the inner mandrel 48 and radially overlap the annular cavity 52. Each suspension element 64 may be attached to a radial distal end portion of a respective one of the rods. Each suspension element 64 projects axially into the annular cavity 52 from the fixture 62 to an axial distal end, which end is mounted to the tubular body 42.

An exemplary embodiment of the inner mandrel 48 is shown in FIG. 7. This inner mandrel 48 includes a plurality of discrete arcuate circumferential mandrel segments 66. These mandrels segments 66 are arranged together about the centerline 54 and collectively form the outer surface 56. Exemplary embodiments of other such segmented mandrels are disclosed in U.S. Patent No. 8,245,750 and U.S. Patent No. 8,474,684.

The outer surface 56 has a complex / radially varying tubular geometry. The outer surface 56 of FIG. 7, for example, extends circumferentially about the axial centerline 54. The outer surface 56 extends axially along the centerline 54 between an axial first (e.g., bottom) end 68 and the axial second (e.g., top) end 70. At least a portion of the outer surface 56 (e.g., an axial length of the outer surface 56) or the entire outer surface 56 may have an axially convex geometry. For example, a side section of the outer surface 56 may have a convex geometry when viewed in a plane in which the centerline 54 lies as shown in FIGS. 6 and 7. The outer surface 56 therefore may be generally barrel shaped. The outer surface 56 of the present disclosure, however, is not limited to such an exemplary barrel shaped configuration. For example, in other embodiments, the axial portion of the outer surface 56 may have a straight, undulating or other type of side-sectional geometry.

An exemplary embodiment of the outer mandrel 50 is shown in FIG. 8. The outer mandrel 50 has a non-segmented tubular body 42, which forms the inner surface 58. This inner surface 58 may have a cylindrical geometry as shown in FIGS. 6 and 8. The present disclosure, however, is not limited to such an exemplary geometry.

In step 308, the tubular body 42 is heated to an elevated temperature within the mandrel assembly.

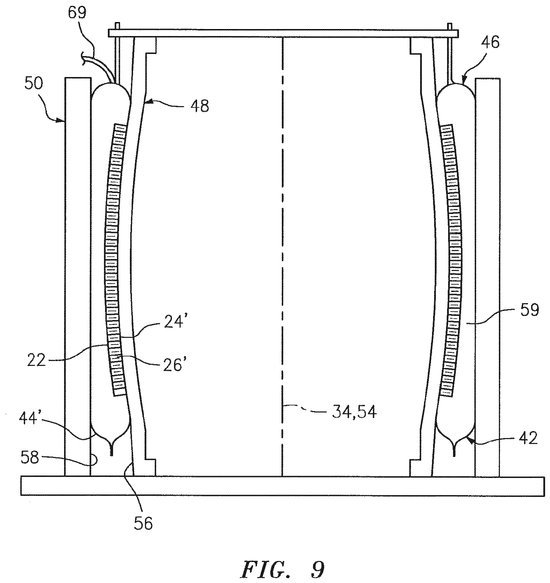

In step 310, the tubular body 42 and, thus, the heated panel 20' is shaped to at least partially (or substantially completely) conform to the outer surface 56 of the inner mandrel 48, for example, as shown in FIG. 9. In particular, fluid (e.g., pressurized inert fluid such as inert gas) within the pressure vessel 46 is pressurized, for example, by directing the fluid into the pressure vessel 46 through an inlet / outlet conduit 69 from a pump system. This pressurized fluid subjects the second skin 24' and the sheet 44 to a pressure differential thereacross, such that the pressurized fluid forces (e.g., pushes) the second skin 24' radially inward against the outer surface 56 and forces (e.g., pushes) the sheet 44 radially outward against the inner surface 58. The pressurized fluid is operable to exert a pressure differential across the second skin 24', but not the first skin 22' nor the core 26', since the pressurized fluid is directed from a plenum 59 (formed between the panel 20' and the sheet 44 and within the pressure vessel) into the cavities 32 of the core 26' through the perforations 28 in the first skin 22' (perforations 28 and cavities 32 shown in FIG. 1). Thus, the pressurized fluid surrounds the core walls 30 (see FIG. 1) and the first skin 22', whereas the pressurized fluid is just on one side of the second skin 24' and one side of the sheet 44.

As the second skin 24' is forced (e.g., pushed) against the outer surface 56, the bonds between the second skin 24' and the core 26' cause the core 26' to be pulled radially inward towards the inner mandrel 48 along with the second skin 24'. Similarly, the bonds between the core 26' and the first skin 22' cause the first skin 22' to the pulled radially inward towards the inner mandrel 48 along with the core 26' and the second skin 24'.

It is worth noting, by causing the panel 20' to be deformed radially inward against the inner mandrel 48, the inventor has found the elements 22', 24' and 26' may be shaped without deforming the core 26'. By contrast, if the panel was to take the form of an axially concave inner surface of an outer mandrel, there is a possibility that the pressure of the forming fluid would crush the honeycomb core. If provision for adequate axial extension during forming is made, then forming can be performed without creating creases or other formation induced defects in the first skin 22' or the second skin 24'.In step 312, the fluid pressure within the pressure vessel 46 is at least partially released.

In step 314, the shaped tubular body 42 is removed from the mandrel assembly. For example, the circumferential mandrel segments 66 (see FIG. 7) may be disassembled from one another such that these segments 66 may be removed from a bore of the shaped panel 20'. The shaped tubular body 42 may then be removed from a bore of the outer mandrel 50.

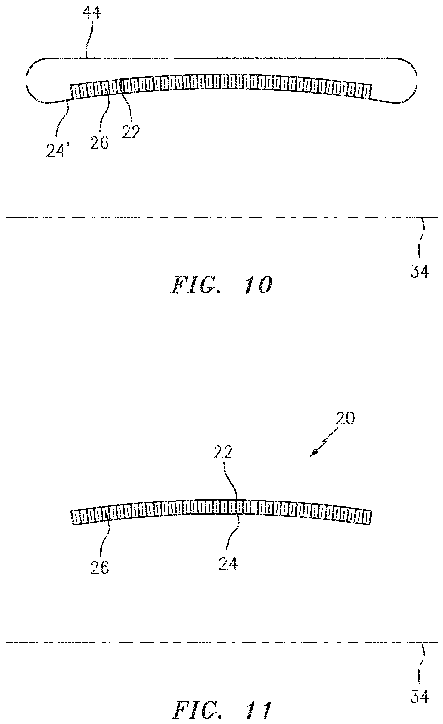

In step 316, the sheet 44 is disconnected from the second skin 24', for example, as shown in FIG. 10. This disconnection may be performed by breaking the bond between the sheet 44 and the second skin 24'. Alternatively, the disconnection may be performed by cutting away an annular portion of the sheet 44 and/or an annular portion of the second skin 24'.

In step 318, material is removed from the second skin 24' to provide the structural panel 20, for example, as shown in FIG. 11. Material from a portion or an entirety of a perimeter of the second skin 24', for example, may be trimmed off of the panel such that a perimeter edge of the second skin 24 substantially matches and is aligned with perimeter edges of the first skin 22 and/or the core 26.

While various embodiments of the present invention have been disclosed, it will be apparent to those of ordinary skill in the art that many more embodiments and implementations are possible within the scope of the invention.

Accordingly, the present invention is not to be restricted except in light of the attached claims.

## Claims

1. A manufacturing process, comprising:
arranging a tubular body (42) with a mandrel (48), the tubular body (42) circumscribing an outer surface (56) of the mandrel (48) and comprising a panel (20) and a sheet (44), the panel (20) comprising a porous first skin (22), a second skin (24) and a cellular core (26) between and connected to the porous first skin (24) and the second skin (24), and the sheet (44) configured with the second skin (24) to form a pressure vessel, wherein the first skin (22) and the cellular core (26) are located within the pressure vessel, and at least a portion of the outer surface (56) of the mandrel (48) comprises an axially convex geometry;
heating the panel (20); and
shaping the heated panel (20) to at least partially conform to the outer surface (56) by pressurizing fluid within the pressure vessel.

2. The process of claim 1, wherein the pressurized fluid forces at least a portion of the second skin (24) radially inward against the outer surface (56) causing the heated panel (20) to at least partially conform to the outer surface (56).

3. The process of claim 2, further comprising arranging a second mandrel (50) with the tubular body, wherein an inner surface (58) of the second mandrel (50) circumscribes the tubular body, and the pressurized fluid forces at least a portion of the sheet (44) radially outward against the inner surfacc (58).

4. The process of claim 1, 2 or 3, wherein perforations in the porous first skin (22) fluidly couple cavities (32) within the cellular core (26) with a plenum formed between the panel (20) and the sheet (44), and the pressurized fluid is within the perforations, the cavities (32) and the plenum.

5. The process of any preceding claim, wherein the mandrel is configured as a tubular mandrel.

6. The process of any preceding claim, further comprising removing a plurality of discrete circumferential mandrel segments from a bore of the shaped panel (20), wherein the outer surface (56) is collectively formed by the circumferential mandrel segments.

7. The process of claim 6, wherein the axially convex geometry extends circumferentially around a centerline of the mandrel.

8. The process of any preceding claim, further comprising disconnecting the sheet (44) from the second skin (24) of the shaped panel (20).

9. The process of claim 8, further comprising removing material from a perimeter of the second skin (24), wherein the sheet (44) was connected to the material before being disconnected from the second skin (24).

10. The process of any preceding claim, further comprising:
arranging the cellular core (26) between a first skin (22) and the second skin (24);
bonding the cellular core (26) to the first skin (22) and the second skin (24);
perforating the first skin (22) to provide the porous first skin (22); and
bonding a perimeter portion of the sheet (44) to a perimeter portion of the second skin (24).

11. The process of any preceding claim, wherein the cellular core (26) is at least one of welded, brazed or diffusion bonded to the porous first skin (22) and the second skin (24).

12. The process of any preceding claim, wherein the fluid comprises an inert gas.

13. The process of any preceding claim, further comprising providing a barrel of an inner fixed structure for an aircraft propulsion system, the barrel comprising at least a portion of the shaped panel (20).

## Patentansprüche

1. Herstellungsverfahren, umfassend:
Anordnen eines röhrenförmigen Körpers (42) mit einem Dorn (48), wobei der röhrenförmige Körper (42) eine Außenfläche (56) des Dorns (48) umschreibt und eine Platte (20) und eine Folie (44) umfasst, wobei die Platte (20) eine poröse erste Haut (22), eine zweite Haut (24) und einen zellulären Kern (26) zwischen der porösen ersten Haut (24) und der zweiten Haut (24) und mit diesen verbunden umfasst, und die Platte (44) mit der zweiten Haut (24) so konfiguriert ist, dass sie einen Druckbehälter bildet, wobei die erste Haut (22) und der zelluläre Kern (26) innerhalb des Druckbehälters angeordnet sind und mindestens ein Abschnitt der Außenfläche (56) des Dorns (48) eine axial konvexe Geometrie umfasst;
Erhitzen der Platte (20); und
Formen der erhitzten Platte (20), sodass sie sich mindestens teilweise an die Außenfläche (56) anpasst, indem Fluid innerhalb des Druckbehälters unter Druck gesetzt wird.

2. Verfahren nach Anspruch 1, wobei das unter Druck stehende Fluid mindestens einen Abschnitt der zweiten Haut (24) radial nach innen gegen die Außenfläche (56) drückt, wodurch sich die erhitzte Platte (20) mindestens teilweise an die Außenfläche (56) anpasst.

3. Verfahren nach Anspruch 2, ferner umfassend Anordnen eines zweiten Dorns (50) mit dem röhrenförmigen Körper, wobei eine Innenfläche (58) des zweiten Dorns (50) den röhrenförmigen Körper umschreibt und das unter Druck stehende Fluid mindestens einen Abschnitt der Folie (44) radial nach außen gegen die Innenfläche (58) drückt.

4. Verfahren nach Anspruch 1, 2 oder 3, wobei Perforationen in der porösen ersten Haut (22) Hohlräume (32) innerhalb des zellulären Kerns (26) mit einem zwischen der Platte (20) und der Folie (44) gebildeten Plenum fluidisch koppeln und sich das unter Druck stehende Fluid innerhalb der Perforationen, der Hohlräume (32) und des Plenums befindet.

5. Verfahren nach einem der vorhergehenden Ansprüche, wobei der Dorn als rohrförmiger Dorn ausgebildet ist.

6. Verfahren nach einem der vorhergehenden Ansprüche, ferner umfassend Entfernen einer Vielzahl von diskreten, umlaufenden Dornsegmenten aus einer Bohrung der geformten Platte (20), wobei die Außenfläche (56) gemeinsam von den umlaufenden Dornsegmenten gebildet wird.

7. Verfahren nach Anspruch 6, wobei sich die axial konvexe Geometrie in Umfangsrichtung um eine Mittellinie des Dorns erstreckt.

8. Verfahren nach einem der vorhergehenden Ansprüche, ferner umfassend das Trennen der Folie (44) von der zweiten Haut (24) der geformten Platte (20).

9. Verfahren nach Anspruch 8, ferner umfassend das Entfernen von Material von einem Umfang der zweiten Haut (24), wobei die Folie (44) mit dem Material verbunden war, bevor sie von der zweiten Haut (24) getrennt wurde.

10. Verfahren nach einem der vorhergehenden Ansprüche, ferner umfassend:
Anordnen des zellularen Kerns (26) zwischen einer ersten Haut (22) und der zweiten Haut (24);
Verbinden des zellulären Kerns (26) mit der ersten Haut (22) und der zweiten Haut (24);
Perforieren der ersten Haut (22), um die poröse erste Haut (22) bereitzustellen; und
Verbinden eines Umfangsabschnitts der Folie (44) mit einem Umfangsabschnitt der zweiten Haut (24).

11. Verfahren nach einem der vorhergehenden Ansprüche, wobei der zelluläre Kern (26) mit der porösen ersten Haut (22) und/oder der zweiten Haut (24) verschweißt, verlötet oder diffusionsverbunden ist.

12. Verfahren nach einem der vorhergehenden Ansprüche, wobei das Fluid ein Inertgas umfasst.

13. Verfahren nach einem der vorhergehenden Ansprüche, ferner umfassend das Bereitstellen eines Fasses einer inneren festen Struktur für ein Luftfahrzeug-Antriebssystem, wobei das Fass mindestens einen Teil der geformten Platte (20) umfasst.

## Revendications

1. Procédé de fabrication, comprenant :
l'agencement d'un corps tubulaire (42) avec un mandrin (48), le corps tubulaire (42) circonscrivant une surface externe (56) du mandrin (48) et comprenant un panneau (20) et une feuille (44), le panneau ( 20) comprenant une première peau poreuse (22), une seconde peau (24) et un noyau cellulaire (26) entre et connecté à la première peau poreuse (24) et à la seconde peau (24), et la feuille (44) étant configurée avec la seconde peau (24) pour former un récipient sous pression, dans lequel la première peau (22) et le noyau cellulaire (26) sont situés à l'intérieur du récipient sous pression, et au moins une partie de la surface externe (56) du mandrin (48) comprend une géométrie axialement convexe ;
le chauffage du panneau (20) ; et
le façonnage du panneau chauffé (20) pour qu'il se conforme au moins partiellement à la surface externe (56) en mettant sous pression le fluide à l'intérieur du récipient sous pression.

2. Procédé selon la revendication 1, dans lequel le fluide sous pression force au moins une partie de la seconde peau (24) radialement vers l'intérieur contre la surface externe (56) amenant le panneau chauffé (20) à se conformer au moins partiellement à la surface externe (56).

3. Procédé selon la revendication 2, comprenant en outre l'agencement d'un second mandrin (50) avec le corps tubulaire, dans lequel une surface interne (58) du second mandrin (50) circonscrit le corps tubulaire, et le fluide sous pression force au moins une partie de la feuille (44) radialement vers l'extérieur contre la surface interne (58).

4. Procédé selon la revendication 1, 2 ou 3, dans lequel des perforations dans la première peau poreuse (22) couplent de manière fluidique des cavités (32) à l'intérieur du noyau cellulaire (26) avec un plénum formé entre le panneau (20) et la feuille (44), et le fluide sous pression se trouve à l'intérieur des perforations, des cavités (32) et du plénum.

5. Procédé selon une quelconque revendication précédente, dans lequel le mandrin est configuré comme un mandrin tubulaire.

6. Procédé selon une quelconque revendication précédente, comprenant en outre le retrait d'une pluralité de segments de mandrin circonférentiels discrets d'un alésage du panneau façonné (20), dans lequel la surface externe (56) est formée collectivement par les segments de mandrin circonférentiels.

7. Procédé selon la revendication 6, dans lequel la géométrie axialement convexe s'étend circonférentiellement autour d'un axe central du mandrin.

8. Procédé selon une quelconque revendication précédente, comprenant en outre la déconnexion de la feuille (44) de la seconde peau (24) du panneau façonné (20).

9. Procédé selon la revendication 8, comprenant en outre le retrait de matériau d'un périmètre de la seconde peau (24), dans lequel la feuille (44) était connectée au matériau avant d'être déconnectée de la seconde peau (24).

10. Procédé selon une quelconque revendication précédente, comprenant en outre :
l'agencement du noyau cellulaire (26) entre une première peau (22) et la seconde peau (24) ;
la liaison du noyau cellulaire (26) à la première peau (22) et à la seconde peau (24) ;
la perforation de la première peau (22) pour fournir la première peau poreuse (22) ; et
la liaison d'une partie périmétrique de la feuille (44) à une partie périmétrique de la seconde peau (24).

11. Procédé selon une quelconque revendication précédente, dans lequel le noyau cellulaire (26) est au moins l'un parmi soudé, brasé ou lié par diffusion à la première peau poreuse (22) et à la seconde peau (24).

12. Procédé selon une quelconque revendication précédente, dans lequel le fluide comprend un gaz inerte.

13. Procédé selon une quelconque revendication précédente, comprenant en outre la fourniture d'un cylindre d'une structure fixe interne pour un système de propulsion d'aéronef, le cylindre comprenant au moins une partie du panneau façonné (20) .
